Europäisches Patentamt

European Patent Office

Office européen des brevets

(19)

(11) **EP 0 622 187 B1**

(12) **EUROPÄISCHE PATENTSCHRIFT**

(45) Veröffentlichungstag und Bekanntmachung des Hinweises auf die Patenterteilung:
**13.03.2002 Patentblatt 2002/11**

(51) Int Cl.⁷: **B32B 27/32**, C08L 23/06, C08L 23/10, B29C 55/12

(21) Anmeldenummer: **94105962.8**

(22) Anmeldetag: **18.04.1994**

(54) **Matte, biaxial orientierte Polypropylen-Mehrschichtfolie mit hohem Schrumpf, Verfahren zu ihrer Herstellung und ihre Verwendung**

Matt, biaxially oriented and highly-shrinkable multilayered polypropylene film, process for its manufacture and its use

Film en polypropylène multicouche mat, orienté biaxiallement et à rétraction élevée, son procédé de fabrication et son utlisation

(84) Benannte Vertragsstaaten:
**BE DE ES FR GB IT NL**

(30) Priorität: **27.04.1993 DE 4313640**

(43) Veröffentlichungstag der Anmeldung:
**02.11.1994 Patentblatt 1994/44**

(73) Patentinhaber: **Trespaphan GmbH**
**66539 Neunkirchen (DE)**

(72) Erfinder:
• **Peiffer, Herbert, Dr.**
**D-55126 Mainz (DE)**
• **Murschall, Ursula, Dr.**
**D-55283 Nierstein (DE)**
• **Schlögl, Gunter, Dr.**
**D-65779 Kelkheim (DE)**

(74) Vertreter: **Luderschmidt, Schüler & Partner GbR**
**Patentanwälte,**
**Postfach 3929**
**65029 Wiesbaden (DE)**

(56) Entgegenhaltungen:
**EP-A- 0 367 613**     **EP-A- 0 489 373**
**EP-A- 0 538 747**     **EP-A- 0 563 796**
**EP-A- 0 616 885**     **EP-A- 0 619 183**
**GB-A- 2 115 348**

• **PATENT ABSTRACTS OF JAPAN vol. 16, no. 306 (M-1276)6. Juli 1992 & JP-A-04 086 260 (TOYO SEIKAN K LTD) 18. März 1992**
• **DATABASE WPI Week 9141, Derwent Publications Ltd., London, GB; AN 91-298804 & JP-A-3 197 541 (IDEMITSU PETROCHEM KK) 28. August 1991**

**Beschreibung**

Die Erfindung betrifft eine Polypropylen-Mehrschichtfolie mit hohem Schrumpf, welche mindestens eine Basisschicht enthaltend Polypropylen oder eine Polypropylenmischung und mindestens eine Deckschicht umfaßt, welche eine Mischung bzw. ein Blend zweier Komponenten I und II enthält.

Die Komponente I der Mischung bzw. des Blends ist ein Propylenhomopolymeres oder ein ein Copolymeres aus $\alpha$-Olefinen mit 2 bis 10 Kohlenstoffatomen oder ein Terpolymeres aus $\alpha$-Olefinen mit 2 bis 10 Kohlenstoffatomen oder eine Mischung aus zwei oder mehreren der genannten Homo-, Co- und Terpolymeren oder ein Blend aus zwei oder mehreren der genannten Homo-, Co- und Terpolymeren.

Die Komponente II der Mischung bzw. des Blends ist ein High Density Polyethylen (HDPE) oder ein Blend aus HDPE und einem oder mehreren weiteren Polymeren, ausgewählt aus der Gruppe Propylenhomopolymer, Copolymer aus $\alpha$-Olefinen mit 2 bis 10 Kohlenstoffatomen, Terpolymer aus $\alpha$-Olefinen mit 2 bis 10 Kohlenstoffatomen, und ein Blend aus Co- und Terpolymeren aus $\alpha$-Olefinen mit 2 bis 10 Kohlenstoffatomen.

Die erfindungsgemäße Folie zeichnet sich durch eine charakteristische matte Oberfläche bzw. Optik und einen sehr hohen Schrumpf in Längs- und Querrichtung aus.

Die Erfindung betrifft ferner ein Verfahren zur Herstellung der Mehrschichtfolie sowie ihre Verwendung.

Schrumpffolien sind im Stand der Technik bekannt und finden als Verpackungsfolien breite Anwendung.

Die Schrumpfverpackung wird üblicherweise über die Arbeitsschritte Halbschlauchlegung, Guteinbringung, Trennschweißung und nachfolgende Schrumpfung im Schrumpfofen hergestellt. Auf diese Weise erhält man eine sehr eng anliegende faltenfreie Folienverpackung, wie sie in vielen Fällen besonders wünschenswert ist. Damit dieser enge Einschlag zuverlässig erzielt wird, müssen die verwendeten Folien sehr hohe Schrumpfwerte aufweisen, da die Folienumhüllung nach dem Arbeitsschritt Trennschweißen das Füllgut relativ locker umgibt. Dies ergibt sich aus dem Umstand, daß der Schweißdraht nicht beliebig dicht an das Packgut herangeführt werden kann. Die sehr hohen Schrumpfwerte der Folien sind daher unabdingbare Voraussetzung für deren Verwendung als Schrumpfverpackung. Solche Folien sind z. B. in EP-A-0 436 196, DE-A-19 54 467, DE-A-32 15 120 und EP-A-0 350 859 beschrieben.

Herkömmliche Schrumpffolien zeichnen sich in der Regel durch sehr hohe Glanzwerte und eine sehr geringe Trübung aus. Für bestimmte Anwendungsbereiche der Schrumpffolien ist dieses Aussehen nicht wünschenswert, sondern sogar nachteilhaft. Beispielsweise kann die Lesbarkeit eines Aufdrucks auf dem verpackten Gut durch Reflexion an der hochglänzenden Oberfläche der Verpackungsfolie sehr beeinträchtigt werden.

Darüber hinaus sind alle bekannten Schrumpffolien verbesserungsbedürftig bezüglich ihrer Maschinengängigkeit und ihrer Antistatik, sowie bezüglich ihrer Rollenaufmachung und Konfektionierbarkeit.

Aus der EP-A-0 489 373 sind siegelfähige Schrumpffolien bekannt, welche aus einer PP-Homopolymer-Basisschicht und Ethylen-Propylen-Copolymer-Deckschichten aufgebaut sind und einen hohen Glanz und eine geringe Trübung aufweisen. Diese Folien weisen gegenüber herkömmlich siegelfähigen Verpakkungsfolien einen erhöhten Schrumpf auf, jedoch sind die Schrumpfeigenschaften nicht ausreichend, wenn eng anliegende Umhüllungen gefordert sind.

Die deutsche Patentanmeldung P 41 35 096.0 offenbart Polyolefin-Mehrschichtfolien aus einer Polypropylen-Basisschicht und einer Deckschicht aus einem HDPE-Blend. Dieses HDPE-Blend besteht aus HDPE und Co- und/oder Terpolymeren aus a-Olefinen und gegebenenfalls Polypropylen. Die Deckschicht der Mehrschichtfolie weist einen minimalen Glanz und eine maximale Trübung auf, wodurch der Folie ein charakteristisches mattes Aussehen verliehen wird.

Aus der US-A-4 578 316 ist eine biaxial orientierte Polyolefin-Mehrschichtfolie bekannt, deren Basisschicht aus einem Polypropylen-Homopolymeren und deren Deckschicht aus einem Blend von Polypropylen und MDPE und/oder HDPE besteht. Diese Polyolefinfolie besitzt einen niedrigen Reibungskoeffizienten in Verbindung mit einer gut benetzbaren Oberfläche; jedoch weist auch dieser Film eine ausgezeichnete optische Klarheit auf.

In der WO 89/10839 werden Polyolefin-Mehrschichtfolien beschrieben, deren Basisschicht aus einem Polypropylenpolymeren und deren Deckschichten entweder aus HDPE oder einem Ethylen-Propylen-Copolymeren oder einem Polypropylen bestehen, wobei die Folie bei speziellen Temperaturbedingungen gestreckt wird. Sie besitzt insbesondere einen niedrigen Reibungskoeffizienten und eine gute Benetzbarkeit, aber gleichzeitig auch einen hohen Glanz und eine geringe Trübung.

Die EP-A-0 367 613 offenbart eine Mehrschichtfolie aus einer vakuolenhaltigen Polypropylen-Basisschicht und einer Deckschicht, welche beschriftbar ist und ein erstes Polymer mit einem Schmelzflußindex von $\leq 1$ g/10 min und ein zweites Polymeres enthält, welches mit dem besagten ersten Polymeren inkompatibel ist.

Als Beispiel für das erste Polymer ist ein HDPE mit einer Dichte von 0,92 bis 0,97 g/cm$^3$ beschrieben. Das inkompatible Polymer ist ein Polypropylen oder Copolymere des Propylens oder Terpolymere des Propylens. Die beschriebene Folie hat ein opakes Aussehen, d. h. sie ist im wesentlichen lichtundurchlässig. Die beschriebene Folie weist eine Dichte von 0,69 g/cm$^3$ auf. Diese Folie ist für viele Verwendungszwecke aufgrund ihrer Opazität nicht einzusetzen.

Die EP 0 563 796 beschreibt eineseidenmatte polyolefinische Folie, welche mindestens eine Basisschicht enthaltend Polypropylen und mindestens eine Deckschicht umfaßt, welche eine Mischung zweier Mischungskomponenten I und II enthält. Die Mischungskomponente I enthält im wesentlichen ein Polypropylenhomopolymeres oder ein Copolymeres oder ein Terpolymeres von Ethylen. Propylen, Butylen oder einem anderen p-Olefin mit 5 bis 10 Kohlenstoffatomen oder eine Mischung aus zwei oder mehreren der genannten Homo-, Co- und Terpolymeren. Die Mischungskomponente II enthält im wesentlichen ein HDPE oder ein Blend zweier Blendkomponenten A und B. Die Blendkomponente A ist im wesentlichen ein HDFE. Die Blendkomponente B ist im wesentlichen ein Polypropylenhomopolymeres oder ein Copolymeres oder ein Terpolymeres von Ethylen, Propylen, Butylen oder einem anderen p-Olefin mit 5 bis 10 Kohlenstoffatomen oder eine Mischung aus zwei oder mehreren der genannten Homo-, Co- und Terpolymeren.

Die EP 0 619 183 beschreibt eine matteopake polyolefinische Folie, welche mindestens eine Basisschicht enthaltend Polypropylen und mindestens eine Deckschicht umfaßt, welche eine Mischung zweier Mischungskomponenten I und II enthält. Die Mischungskomponente I enthält im wesentlichen ein Polypropylenhomopolymeres oder ein Copolymeres oder ein Terpolymeres von Ethylen, Propylen, Butylen oder einem anderen p-Olefin mit 5 bis 10 Kohlenstoffatomen oder eine Mischung aus zwei oder mehreren der genannten Homo-, Co- und Terpolymeren. Die Mischungskomponente II enthält im wesentlichen ein HDPE mit einem MFI von >1 bis 50 g/10min oder ein Blend zweier Blendkomponenten A und B. Die Blendkomponente A ist im wesentlichen ein HDPE mit einem MFI von >1 bis 50 g/10min. Die Blendkomponente B ist im wesentlichen ein Polypropylenhomopolymeres oder ein Copolymeres oder ein Terpolymeres von Ethylen, Propylen, Butylen oder einem anderen p-Olefin mit 5 bis 10 Kohlenstoffatomen oder eine Mischung aus zwei oder mehreren der genannten Homo-, Co- und Terpolymeren.

Die EP 0 616 885 betrifft eine matte mehrschichtige Polypropylenfolie mit einer einseitig coextrudierten matten Schicht aus einer Polymermischung. Die Polymermischung enthält ein Propylen-Ethylen Blockcopolymer, ein modifiziertes Polyethylen, welches mit polaren Gruppen modifiziert wurde und ein auf Ethylen, Propylen, Butylen basierendes statistisches Co- und /oder Terpolymer mit Propylen als Hauptkomponente.

Die Aufgabe der vorliegenden Erfindung bestand darin, eine hochschrumpf-fähige, biaxial orientierte Polypropylen-Mehrschichtfolie gemäß Anspruch 1 zur Verfügung zu stellen, die ein charakteristisches gleichmäßiges mattes Aussehen und eine gute Maschinengängigkeit und eine gute Antistatik zeigt und gleichzeitig sehr gute Schrumpfeigenschaften aufweist. Darüberhinaus soll die Folie eine gute Rollenaufmachung und eine gute Konfektionierbarkeit aufweisen.

Erfindungsgemäß wird diese Aufgabe gelöst durch eine Mehrschichtfolie der eingangs genannten Gattung, wobei die Komponente I im wesentlichen

    ein Propylenhomopolymeres oder
    ein Copolymeres von

        Ethylen und Propylen oder
        Ethylen und Butylen oder
        Propylen und Butylen oder
        Ethylen und einem anderen $\alpha$-Olefin mit 5 bis 10 Kohlenstoffatomen
        oder
        Propylen und einem anderen $\alpha$-Olefin mit 5 bis 10 Kohlenstoffatomen oder.

    ein Terpolymeres von

        Ethylen und Propylen und Butylen oder
        Ethylen und Propylen und einem anderen $\alpha$-Olefin mit 5 bis 10 Kohlenstoffatomen oder
        eine Mischung aus zwei oder mehreren der genannten Homo-, Co- und Terpolymeren oder
        ein Blend aus zwei oder mehreren der genannten Homo-, Co- und Terpolymeren, gegebenenfalls gemischt
        mit einem oder mehreren der genannten Homo-, Co- und Terpolymeren,

    enthält und
    die Komponente II im wesentlichen ein HDPE mit einem Schmelzfluxindex MFI, gemessen nach DIN 53735 von größer 1 bis 45 g/10 min oder ein Blend zweier Blendkomponenten A und B enthält, wobei
    die Blendkomponente A im wesentlichen

        ein HDPE mit einem Schmelzfluxindex MFI, gemessen nach DIN 53735 von größer 1 bis 45 g/10 min ist und

    die Blendkomponente B im wesentlichen

ein Propylenhomopolymeres
oder ein Copolymeres von

Ethylen und Propylen oder
Ethylen und Butylen oder
Propylen und Butylen oder
Ethylen und einem anderen α-Olefin mit 5 bis 10 Kohlenstoffatomen oder .
Propylen und einem anderen α-Olefin mit 5 bis 10 Kohlenstoffatomen oder

ein Terpolymeres von

Ethylen und Propylen und Butylen oder
Ethylen und Propylen und einem anderen α-Olefin mit 5 bis 10 Kohlenstoffatomen oder

eine Mischung aus zwei oder mehreren der genannten Homo-, Co- und Terpolymeren oder
ein Blend aus zwei oder mehreren der genannten Homo-, Co- und Terpolymeren

ist, und die Mehrschichtfolie bei 120 °C einen Längsschrumpf von größer 20 %, vorzugsweise von 25 bis 50 %, und einen Querschrumpf von größer 25 %, vorzugsweise von 30 bis 60 %, aufweist und die Folie matt ist und die Folie durch Streckung in Längs- und Querrichtung orientiert wird, wobei das Verhältnis der Streckverhältnisse von quer/längs kleiner als 2 ist.

Die erfindungsgemäßen Folien mit einem Längsschrumpf von größer 20 % bei 120 °C, vorzugsweise von 25 bis 50 %, insbesondere von 30 bis 40 %, und einem erhöhten Querschrumpf von größer 25 % bei 120 °C, vorzugsweise von 30 bis 60 %, insbesondere von 40 bis 50 %, weisen im Vergleich zu den bekannten Folien nach dem Stand der Technik ein hervorragendes hohes Schrumpfvermögen auf. Sie liefern eine deutlich engere, falten- und wellenfreie Verpackung als herkömmliche Folien durch die isotropen Schrumpfeigenschaften und den stark anwachsenden Schrumpf bei erhöhter Temperatur. Dabei trägt der gleichmäßige Schrumpf in Längs- und Querrichtung auch bei erhöhter Temperatur (etwa 120 °C) wesentlich zu dem gleichmäßigen Einschlag bei. Im allgemeinen ist das Verhältnis der Schrumpfwerte Querschrumpf $Q_s$:Längsschrumpf $L_s$ bei einer jeweiligen Temperatur kleiner 2. Vorzugsweise liegt das Verhältnis $Q_s$:$L_s$ im Bereich von kleiner 2 2 bis 0,5, insbesondere im Bereich von kleiner 2 2 bis 1. Die enge, falten- und wellenfreie Verpackung in Kombination mit einem charakteristischen matten Aussehen gewährleistet Verpackungen mit einem wesentlich attraktiveren, werbewirksamen Aussehen.

Unter Mischungen im Sinne der vorliegenden Erfindung sind mechanische Mischungen zu verstehen, welche aus den Einzelkomponenten hergestellt werden. Im allgemeinen werden hierzu die einzelnen Bestandteile als gepreßte Formkörper kleiner Größe, z. B. linsen- oder kugelförmiges Granulat, zusammengeschüttet und mit einer geeigneten Rüttelvorrichtung mechanisch gemischt.

Ein Blend im Sinne der vorliegenden Erfindung ist ein legierungsartiger Verbund der einzelnen Komponenten, welcher nicht mehr in die ursprünglichen Bestandteile zerlegt werden kann. Ein Blend weist Eigenschaften wie ein homogener Stoff auf und kann entsprechend durch geeignete Parameter charakterisiert werden.

Die Basisschicht der erfindungsgemäßen Mehrschichtfolie enthält Polypropylen oder eine Polypropylenmischung.

Unter Polypropylen bzw. -mischungen wird/werden im Sinne der vorliegenden Erfindung ein Co- oder Terpolymer von α-Olefinen mit 2 bis 8 C-Atomen, insbesondere Co- oder Terpolymere des Propylens oder eine Mischung der genannten Polymere verstanden. Als α-olefinische Co- oder Terpolymere sind Copolymere aus Ethylen-Propylen- oder Propylen-Butylen-Einheiten oder Terpolymere des Propylens bevorzugt. Insbesondere sind Ethylen-Propylen-Copolymere mit einem Ethylengehalt von 10 Gew.-% oder weniger und Ethylen-Propylen-Butylen-Terpolymere mit einem Ethylengehalt von 1 bis 7 Gew.-% und einem Butylengehalt von 4 bis 10 Gew.-% und einem Propylengehalt von 83 bis 95 Gew.-% bevorzugt. Die Angaben in Gew.-% beziehen sich auf das jeweilige Co- oder Terpolymere. Des weiteren sind Mischungen aus zwei oder mehreren der obengenannten olefinischen Polymeren geeignet, beispielsweise Mischungen der genannten Propylen-Copolymeren, wie Ethylen-Propylen-Copolymeren mit den genannten Propylen-Terpolymeren wie Ethylen-Propylen-Butylen-Terpolymeren.

Die in der Basisschicht enthaltenen Co- und/oder Terpolymere haben einen Schmelzpunkt im Bereich von 100 bis 150 °C, vorzugsweise 120 bis 135 °C, und einen Schmelzflußindex im Bereich von 0,5 bis 10 g/10 min, vorzugsweise von 2 bis 8 g/10 min (DIN 53 735).

Gegebenenfalls kann die Basisschichtzusammensetzung geringe Mengen eines Propylenhomopolymeren enthalten, wobei diese Mengen so gering gehalten werden müssen, daß die Hochschrumpffähigkeit der Folie nicht beeinträchtigt wird. Im allgemeinen liegt der Anteil an Hömopolymer (wenn enthalten) unter 10 Gew.-%, vorzugsweise unter 5 Gew.-%, bezogen auf das Gewicht der Basisschicht. Als Homopolymere werden gegebenenfalls grundsätzlich die gleichen wie nachstehend für die Deckschicht beschrieben eingesetzt.

Zusätzlich kann die Basisschicht gegebenenfalls Additive in jeweils wirksamen Mengen enthalten, vorzugsweise Antistatika und/oder Gleitmittel.

Die erfindungsgemäße Folie weist eine im wesentlichen transparente, d. h. eine nicht vakuolenhaltige Basisschicht auf.

Gegebenenfalls kann das in der Basisschicht eingesetzte Propylenco- und/oder Propylenterpolymere durch den Zusatz von organischen Peroxiden teilabgebaut werden. Ein Maß für den Grad des Abbaus des Polymeren ist der sogenannte Abbaufaktor A, welcher die relative Änderung des Schmelzflußindex nach DIN 53 735 des Polypropylens, bezogen auf das Ausgangspolymere, angibt.

$$A = \frac{MFI_2}{MFI_1}$$

$MFI_1 =$ Schmelzflußindex des Propylenpolymeren vor dem Zusatz des organischen Peroxids
$MFI_2 =$ Schmelzflußindex des peroxidisch abgebauten Propylenpolymeren

Im allgemeinen liegt der Abbaufaktor A des eingesetzten Propylenpolymeren in einem Bereich von 3 bis 15, vorzugsweise 6 bis 10.

Als organische Peroxide sind Dialkylperoxide besonders bevorzugt, wobei unter einem Alkylrest die üblichen gesättigten geradkettigen oder verzweigten niederen Alkylreste mit bis zu sechs Kohlenstoffatomen verstanden werden. Insbesondere sind 2,5-Dimethyl-2,5-di(t-butylperoxy)-hexan oder Di-t-butylperoxid bevorzugt.

Die Basisschicht der erfindungsgemäßen Folie kann zusätzlich ein Harz enthalten, im allgemeinen in einer Menge von 1 bis 20 Gew.-%, vorzugsweise 1 bis 10 Gew.-%, insbesondere 1 bis 5 Gew.-%, bezogen auf das Gewicht der Basis-schicht. Als Harze sind niedermolekulare Harze, insbesondere Kohlenwasserstoffharze, bevorzugt. Die Kohlenwasserstoffharze können teilweise oder vollständig hydriert sein. Als Harze kommen grundsätzlich synthetische Harze oder Harze natürlichen Ursprungs in Frage. Es hat sich als besonders vorteilhaft erwiesen, Harze mit einem Erweichungspunkt von ≥80 °C (gemessen nach DIN 1995-U4 bzw. ASTM E-28) einzusetzen, wobei solche mit einem Erweichungspunkt von 100 bis 180 °C, insbesondere 120 bis 160 °C, bevorzugt sind. Die Einarbeitung des Harzes in die Folie (z. B. Einschnecken- oder Kaskadenextruder) erfolgt vorzugsweise in Form eines Masterbatches, welches in den Extruder zugegeben wird. Üblich sind beispielsweise Masterbatche, in denen 30 bis 70 Gew.-%, vorzugsweise 50 Gew.-%, Propylenco- und/oder -terpolymeres und 70 bis 30 Gew.-%, vorzugsweise 50 Gew.-%, Kohlenwasserstoffharz enthalten sind. Die Angaben in Gew.-% beziehen sich auf das Gesamtgewicht an Propylenpolymer und Kohlenwasserstoffharz.

Unter den zahlreichen Harzen sind Kohlenwasserstoffharze bevorzugt, und zwar in Form der Erdölharze (Petroleumharze), Styrolharze, Cyclopentadienharze und Terpenharze (diese Harze sind in Ullmanns Encyklopädie der techn. Chemie, 4. Auflage, Band 12, Seiten 525 bis 555, beschrieben).

Die Erdölharze sind solche Kohlenwasserstoffharze, die durch Polymerisation von tiefzersetzten (deep-decomposed) Erdölmaterialien in Gegenwart eines Katalysators hergestellt werden. Diese Erdölmaterialien enthalten gewöhnlich ein Gemisch von harzbildenden Substanzen wie Styrol, Methylstyrol, Vinyltoluol, Inden, Methylinden, Butadien, Isopren, Piperylen und Pentylen. Die Styrolharze sind niedrigmolekulare Homopolymere von Styrol oder Copolymere von Styrol mit anderen Monomeren wie Methylstyrol, Vinyltoluol und Butadien. Die Cyclopentadienharze sind Cyclopentadienhomopolymere oder Cyclopentadiencopolymere, die aus Kohlenteerdestillaten und zerlegtem Erdölgas erhalten werden. Diese Harze werden hergestellt, indem die Materialien, die Cyclopentadien enthalten, während einer langen Zeit bei hoher Temperatur gehalten werden. In Abhängigkeit von der Reaktionstemperatur können Dimere, Trimere oder Oligomere erhalten werden.

Die Terpenharze sind Polymerisate von Terpenen, d. h. Kohlenwasserstoffen der Formel $C_{10}H_{16}$, die in fast allen etherischen Ölen oder ölhaltigen Harzen von Pflanzen enthalten sind, und phenolmodifizierte Terpenharze. Als spezielle Beispiele der Terpene sind Pinen, α-Pinen, Dipenten, Limonen, Myrcen, Camphen und ähnliche Terpene zu nennen.

Als Kohlenwasserstoffharze werden außerdem Styrolhomopolymerisate, Styrolcopolymerisate, Cyclopentadienhomopolymerisate, Cyclopentadiencopolymerisate und/oder Terpenpolymerisate mit einem Erweichungspunkt von jeweils oberhalb 100 °C eingesetzt (bei den ungesättigten Polymerisaten ist das hydrierte Produkt bevorzugt). Ganz besonders bevorzugt werden die Cyclopentadienpolymerisate mit einem Erweichungspunkt von 140 °C und darüber in der Basisschicht eingesetzt.

Bei den Kohlenwasserstoffharzen kann es sich auch um die sogenannten modifizierten Kohlenwasserstoffharze handeln. Die Modifizierung erfolgt im allgemeinen durch Reaktion der Rohstoffe vor der Polymerisation, durch Einführung spezieller Monomere oder durch Reaktion des polymerisierten Produkts, wobei insbesondere Hydrierungen oder Teilhydrierungen vorgenommen werden.

Die erfindungsgemäße Mehrschichtfolie umfaßt mindestens eine Deckschicht, welche eine im folgenden näher beschriebene Mischung zweier Komponenten I und II enthält.

Die Komponente I der Deckschichtmischung bzw. des Blends enthält im wesentlichen

ein Propylenhomopolymer
oder ein Copolymer von

Ethylen und Propylen oder
Ethylen und Butylen oder
Propylen und Butylen oder
Ethylen und einem anderen $\alpha$-Olefin mit 5 bis 10 Kohlenstoffatomen oder
Propylen und einem anderen $\alpha$-Olefin mit 5 bis 10 Kohlenstoffatomen oder

ein Terpolymer von

Ethylen und Propylen und Butylen oder
Ethylen und Propylen und einem anderen $\alpha$-Olefin mit 5 bis 10
Kohlenstoffatomen oder

eine Mischung aus zwei oder mehreren der genannten Homo-, Co- und Terpolymeren oder
ein Blend aus zwei oder mehreren der genannten Homo-, Co- und Terpolymeren, gegebenenfalls gemischt mit
einem oder mehreren der genannten Homo-, Co- und Terpolymeren.

Besonders bevorzugt besteht die Komponente I im wesentlichen aus

einem Propylenhomopolymeren
oder einem Copolymeren von

Ethylen und Propylen oder
Ethylen und Butylen-1 oder
Propylen und Butylen-1 oder aus

einem Terpolymeren von

Ethylen und Propylen und Butylen-1 oder aus

einer Mischung aus zwei oder mehreren der genannten besonders bevorzugten Homo-, Co- und Terpolymeren oder aus
einem Blend aus zwei oder mehreren der genannten besonders bevorzugten Homo-, Co- und Terpolymeren, gegebenenfalls gemischt mit
einem oder mehreren der genannten Homo-, Co- und Terpolymeren,

wobei insbesondere
Propylenhomopolymere oder

statistische Ethylen-Propylen-Copolymere mit

einem Ethylengehalt von 2 bis 10 Gew.-%, bevorzugt 5 bis 8 Gew.-%, oder

statistische Propylen-Butylen-1-Copolymere mit

einem Butylengehalt von 5 bis 40 Gew.-%, bevorzugt 20 bis 30 Gew.-%,

jeweils bezogen auf das Gesamtgewicht des Copolymeren, oder statistische Ethylen-Propylen-Butylen-1-Terpolymere mit

einem Ethylengehalt von 1 bis 10 Gew.-%, bevorzugt 2 bis 6 Gew.-%, und
einem Butylen-1-Gehalt von 3 bis 20 Gew.-%, bevorzugt 8 bis 10 Gew.-%,
jeweils bezogen auf das Gesamtgewicht des Terpolymeren, oder ein Blend aus einem Ethylen-Propylen-Butylen-1-Terpolymeren und einem

Propylen-Butylen-1-Copolymeren

mit einem Ethylengehalt von 0,1 bis 7 Gew.-%
und einem Propylengehalt von 50 bis 90 Gew.-%
und einem Butylen-1-Gehalt von 10 bis 40 Gew.-%,
jeweils bezogen auf das Gesamtgewicht des Polymerblends,

bevorzugt sind.

Das als oder in der Komponente I eingesetzte Propylenhomopolymere enthält zum überwiegenden Teil (mindestens 90 %) Propylen und besitzt einen Schmelzpunkt von 140 °C oder höher, vorzugsweise 150 bis 170 °C, wobei isotaktisches Homopolypropylen mit einem n-heptanlöslichen Anteil von 6 Gew.-% und weniger, bezogen auf das isotaktische Homopolypropylen, bevorzugt ist. Das Homopolymere der Komponente I bzw. das in dieser enthaltene Homopolymere hat im allgemeinen einen Schmelzflußindex von 0,5 g/10 min bis 15 g/10 min, vorzugsweise 1,5 g/10 min bis 6 g/10 min, bei 230 °C und einer Kraft von 21,6 N (DIN 53 735).

Die Komponente II der Deckschichtmischung bzw. des Blends enthält im wesentlichen ein HDPE oder ein Blend, welches im wesentlichen HDPE als Blendkomponente A und eine Blendkomponente B umfaßt.

Unter HDPE werden im Sinne der vorliegenden Erfindung Hochdruckpolyethylene verstanden, welche die folgenden Eigenschaften aufweisen:

1. Der Schmelzflußindex MFI, gemessen nach DIN 53 735 oder ISO 1133 bei 50 N/190 °C, liegt im Bereich von größer 1 bis 45 g/10 min, insbesondere 5 bis 35 g/10 min.
2. Die Viskositätszahl, gemessen nach DIN 53 728, Teil 4, oder ISO 1191, liegt im Bereich von 100 bis 450 $cm^3$/g, vorzugsweise 120 bis 280 $cm^3$/g.
3. Die Kristallinität beträgt 35 bis 80 %, vorzugsweise 50 bis 80 %.
4. Die Dichte, gemessen bei 23 °C nach DIN 53 479, Verfahren A, oder ISO 1183, liegt im Bereich von 0,93 bis 0,97 $g/cm^3$, vorzugsweise 0,95 bis 0,96 $g/_{cm}^3$.
5. Der Schmelzpunkt, gemessen mit DSC (Maximum der Schmelzkurve, Aufheizgeschwindigkeit 20 °C/min), liegt zwischen 120 und 150 °C, vorzugsweise zwischen 125 und 135 °C.

Das HDPE als Komponente II als auch HDPE als Blendkomponente A wird aus den vorstehend beschriebenen Polyethylenen ausgewählt, so daß als Komponente II grundsätzlich das gleiche HDPE wie als Blendkomponente A in Frage kommt.

Die Blendkomponente B besteht im wesentlichen aus

einem Propylenhomopolymeren oder
einem Copolymeren von

Ethylen und Propylen oder
Ethylen und Butylen oder
Propylen und Butylen oder
Ethylen und einem anderen $\alpha$-Olefin mit 5 bis 10 Kohlenstoffatomen oder
Propylen und einem anderen $\alpha$-Olefin mit 5 bis 10 Kohlenstoffatomen oder aus

einem Terpolymeren von

Ethylen und Propylen und Butylen oder
Ethylen und Propylen und einem anderen $\alpha$-Olefin mit 5 bis 10 Kohlenstoffatomen oder aus

einer Mischung aus zwei oder mehreren der genannten Homo-, Co- und Terpolymeren oder aus
einem Blend aus zwei oder mehreren der genannten Homo-, Co- und Terpolymeren.

Besonders bevorzugt besteht die Blendkomponente B im wesentlichen aus

einem Propylenhomopolymeren oder
einem Copolymeren von

Ethylen und Propylen oder
Ethylen und Butylen-1 oder
Propylen und Butylen-1 oder aus

einem Terpolymeren von

Ethylen und Propylen und Butylen-1 oder aus

einer Mischung aus zwei oder mehreren der genannten besonders bevorzugten Homo-, Co- und Terpolymeren oder aus
einem Blend aus zwei oder mehreren der genannten besonders bevorzugten Homo-, Co- und Terpolymeren,

wobei insbesondere

Propylenhomopolymeres oder

statistische Ethylen-Propylen-Copolymere mit

einem Ethylengehalt von 2 bis 10 Gew.-%, bevorzugt 5 bis 8 Gew.-%, oder

statistische Propylen-Butylen-1-Copolymere mit

einem Butylengehalt von 5 bis 40 Gew.-%, bevorzugt 20 bis 30 Gew.-%,

jeweils bezogen auf das Gesamtgewicht des Copolymeren, oder statistische Ethylen-Propylen-Butylen-1-Terpolymere mit

einem Ethylengehalt von 1 bis 10 Gew.-%, bevorzugt 2 bis 6 Gew.-%, und
einem Butylen-1-Gehalt von 3 bis 20 Gew.-%, bevorzugt 8 bis 10 Gew.-%,
jeweils bezogen auf das Gesamtgewicht des Terpolymeren, oder

ein Blend aus einem Ethylen-Propylen-Butylen-1-Terpolymeren und einem Propylen-Butylen-1-Copolymeren

mit einem Ethylengehalt von 0,1 bis 7 Gew.-%
und einem Propylengehalt von 50 bis 90 Gew.-%
und einem Butylen-1-Gehalt von 10 bis 40 Gew.-%,
jeweils bezogen auf das Gesamtgewicht des Polymerblends,

bevorzugt sind.

Das als oder in der Blendkomponente B eingesetzte Propylenhomopolymere enthält zum überwiegenden Teil (mindestens 90 %) Propylen und besitzt einen Schmelzpunkt von 140 °C oder höher, vorzugsweise 150 bis 170 °C, wobei isotaktisches Homopolypropylen mit einem n-heptanlöslichen Anteil von 6 Gew.-% und weniger, bezogen auf das isotaktische Homopolypropylen, bevorzugt ist. Das Homopolymere der Blendkomponente B bzw. das in dieser enthaltene Homopolymere hat im allgemeinen einen Schmelzflußindex von 0,5 g/10 min bis 15 g/10 min, vorzugsweise 1,5 g/10 min bis 6 g/10 min, bei 230 °C und einer Kraft von 21,6 N (DIN 53 735).
Das Verhältnis (Gewichtsverhältnis) der beiden Blendkomponenten A und B liegt zwischen A:B = 20:80 und A:B = 80:20, vorzugsweise zwischen A:B = 40:60 und A:B = 60:40, und liegt insbesondere bevorzugt bei A:B = 45:55.
Das Blend aus den Komponenten A und B hat einen Schmelzflußindex (DIN 53 735 bei 230 °C und 21,6 N Belastung) von 1,5 g/10 min bis 12 g/10 min, vorzugsweise von 2,5 g/10 min bis 6 g/10 min, wobei der Schmelzflußindex des Blends bevorzugt höher liegt als jener des Propylenpolymeren der Basisschicht. Der Schmelzbereich des Blends liegt zwischen 100 und 160 °C, vorzugsweise zwischen 120 und 150 °C.
Das Verhältnis (Gewichtsverhältnis) der beiden Komponenten I und II der Deckschichtmischung bzw. des Blends kann innerhalb weiter Grenzen variieren und richtet sich nach dem beabsichtigten Einsatzzweck der Mehrschichtfolie. Bevorzugt liegt das Verhältnis der Komponenten I und II in einem Bereich von I:II = 10:90 bis I:II = 90:10, vorzugsweise zwischen I:II = 30:70 bis I:II = 70:30, insbesondere bei I:II = 50:50.

Die erfindungsgemäße hochschrumpffähige Mehrschichtfolie umfaßt zumindest die vorstehend beschriebene Basisschicht und mindestens eine matte Deckschicht, welche die vorstehend beschriebene Mischung bzw. Blend enthält. Je nach ihrem vorgesehenen Verwendungszweck kann die Mehrschichtfolie eine weitere Deckschicht auf der gegenüberliegenden Seite aufweisen, die zweckmässigerweise ebenfalls niedrig siegelnd ist.

Aufbau, Dicke und Zusammensetzung einer zweiten Deckschicht können unabhängig von der bereits vorhandenen erfindungsgemäßen matten Deckschicht gewählt werden. Bevorzugte Ausführungsformen der Mehrschichtfolie sind dreischichtig, wobei die zweite Deckschicht ebenfalls eine der vorstehend beschriebenen Mischungen enthalten kann, welche aber nicht mit der der ersten Deckschicht identisch sein muß. Die zweite Deckschicht kann jedoch auch jedes andere gängige Deckschichtpolymer enthalten.

Die Dicke der matten Deckschicht/en ist größer als 0,4 µm und liegt vorzugsweise im Bereich von 0,8 bis 4 µm, insbesondere 1 bis 3 µm, wobei beidseitige Deckschichten gleich oder verschieden dick sein können.

Die Gesamtdicke der erfindungsgemäßen Polyolefin-Mehrschichtfolie kann innerhalb weiter Grenzen variieren und richtet sich nach dem beabsichtigten Einsatz. Sie beträgt vorzugsweise 5 bis 70 µm, insbesondere 5 bis 40 µm, wobei die Basisschicht etwa 50 bis 90 % der Gesamtfoliendicke ausmacht.

Die Dichte der erfindungsgemäßen Folie beträgt mindestens 0,8 g/cm$^3$ und liegt bevorzugt im Bereich von 0,9 bis 0,94 g/cm$^3$.

Zur Verbesserung der Hafteigenschaften der Deckschicht/en kann gegebenenfalls eine Oberfläche der Folie corona- oder flammbehandelt werden, wobei gegebenenfalls die entsprechende Behandlung an beiden Oberflächen vorgenommen werden kann.

Um bestimmte Eigenschaften der erfindungsgemäßen Polypropylenfolie noch weiter zu verbessern, können sowohl die Basisschicht als auch die Deckschicht/en weitere Zusätze in einer jeweils wirksamen Menge enthalten, vorzugsweise Antiblockmittel und/oder Stabilisatoren und/oder Neutralisationsmittel und/oder Gleitmittel und/oder Antistatika, die mit den Polymeren der Basisschicht und der Deckschicht/en verträglich sind. Alle Mengenangaben in der folgenden Ausführung in Gewichtsprozent (Gew.-%) beziehen sich jeweils auf die Schicht oder Schichten, der oder denen das Additiv zugesetzt sein kann.

Geeignete Antiblockmittel sind anorganische Zusatzstoffe wie Siliciumdioxid, Calciumcarbonat, Magnesiumsilicat, Aluminiumsilicat, Calciumphosphat und dergleichen und/oder unverträgliche organische Polymerisate wie Polyamide, Polyester, Polycarbonate und dergleichen, bevorzugt werden Benzoguanaminformaldehyd-Polymere, Siliciumdioxid und Calciumcarbonat. Die wirksame Menge an Antiblockmittel liegt im Bereich von 0,1 bis 2 Gew.-%, vorzugsweise 0,1 bis 0,5 Gew.-%. Die mittlere Teilchengröße liegt zwischen 1 und 6 µm, insbesondere 2 und 5 µm, wobei Teilchen mit einer kugelförmigen Gestalt, wie in der EP-A-0 236 945 und der DE-A-38 01 535 beschrieben, besonders geeignet sind. Bevorzugt werden die Antiblockmittel den Deckschichten zugesetzt.

Als Stabilisatoren können die üblichen stabilisierend wirkenden Verbindungen für Ethylen-, Propylen- und andere α-Olefinpolymere eingesetzt werden. Deren Zusatzmenge liegt zwischen 0,05 und 2 Gew.-%. Besonders geeignet sind phenolische Stabilisatoren, Alkali-/Erdalkalistearate und/oder Alkali-/Erdalkalicarbonate.

Phenolische Stabilisatoren werden in einer Menge von 0,1 bis 0,6 Gew.-%, insbesondere 0,15 bis 0,3 Gew.-%, und mit einer Molmasse von mehr als 500 g/mol bevorzugt. Pentaerythrityl-Tetrakis-3-(3,5-di-Tertiärbutyl-4-Hydroxyphenyl)-Propionat oder 1,3,5-Trimethyl-2,4,6-tris(3,5-di-Tertiärbutyl-4-Hydroxybenzyl)benzol sind besonders vorteilhaft.

Neutralisationsmittel sind vorzugsweise Calciumstearat und/oder Calciumcarbonat einer mittleren Teilchengröße von höchstens 0,7 µm, einer absoluten Teilchengröße von kleiner 10 µm und einer spezifischen Oberfläche von mindestens 40 m$^2$/g.

Gleitmittel sind höhere aliphatische Säureamide, höhere aliphatische Säureester, Wachse und Metallseifen sowie Polydimethylsiloxane. Die wirksame Menge an Gleitmittel liegt im Bereich von 0,01 bis 3 Gew.-%. Besonders geeignet ist der Zusatz von höheren aliphatischen Säureamiden im Bereich von 0,05 bis 0,25 Gew.-% in der Basisschicht und/oder den Deckschichten. Ein insbesondere geeignetes aliphatisches Säureamid ist Erucasäureamid. Der Zusatz von Polydimethylsiloxanen ist im Bereich von 0,1 bis 2,0 Gew.-% bevorzugt, insbesondere Polydimethylsiloxane mit einer Viskosität von 10 000 bis 1 000 000 mm$^2$/s.

Bevorzugte Antistatika sind Alkali-alkansulfonate, polyethermodifizierte, d. h. ethoxylierte und/oder propoxylierte Polydiorganosiloxane (Polydialkylsiloxane, Polyalkylphenylsiloxane und dergleichen) und/oder die im wesentlichen geradkettigen und gesättigten aliphatischen, tertiären Amine mit einem aliphatischen Rest mit 10 bis 20 Kohlenstoffatomen, die mit ω-Hydroxy-(C$_1$-C$_4$)-alkyl-Gruppen substituiert sind, wobei N,N-bis-(2-hydroxyethyl)-alkylamine mit 10 bis 20 Kohlenstoffatomen, vorzugsweise 12 bis 18 Kohlenstoffatomen, im Alkylrest besonders geeignet sind. Die wirksame Menge an Antistatikum liegt im Bereich von 0,05 bis 0,3 Gew.-%. Des weiteren ist Glycerinmonostearat als Antistatikum bevorzugt.

Die Erfindung betrifft weiterhin ein Verfahren zur Herstellung der erfindungsgemäßen Mehrschichtfolie nach dem an sich bekannten Coextrusionsverfahren.

Im Rahmen dieses Verfahrens wird so vorgegangen, daß die den einzelnen Schichten der Folie entsprechenden Schmelzen durch eine Flachdüse coextrudiert werden, die so erhaltene Folie zur Verfestigung auf einer oder mehreren Walze/n abgezogen wird, die Folie anschließend biaxial gestreckt (orientiert), die biaxial gestreckte Folie thermofixiert und gegebenenfalls an der zur Behandlung vorgesehenen Oberflächenschicht corona- oder flammbehandelt wird.

Die biaxiale Streckung (Orientierung) kann simultan oder aufeinanderfolgend durchgeführt werden, wobei die aufeinanderfolgende biaxiale Streckung, bei der zuerst längs (in Maschinenrichtung) und dann quer (senkrecht zur Maschinenrichtung) gestreckt wird, bevorzugt ist. Die Streckbedingungen werden dabei so gewählt, daß die Folie möglichst balanced orientiert ist, d. h. sie weist nahezu isotrope Eigenschaften auf. Die Temperatur bei den Streckprozessen ist so zu wählen, daß die Folie den gewünschten sehr hohen Schrumpf hat.

Zunächst wird wie beim Coextrusionsverfahren üblich das Polymere bzw. die Polymermischung der einzelnen Schichten in einem Extruder komprimiert und verflüssigt, wobei die gegebenenfalls zugesetzten Additive bereits im Polymer bzw. in der Polymermischung enthalten sein können oder während der Extrusion in den Extruder zugegeben werden. Die Schmelzen werden dann gleichzeitig durch eine Flachdüse (Breitschlitzdüse) gepreßt, und die ausgepreßte mehrschichtige Folie wird auf einer oder mehreren Abzugswalzen abgezogen, wobei sie abkühlt und sich verfestigt.

Die so erhaltene Folie wird dann längs und quer zur Extrusionsrichtung gestreckt, was zu einer Orientierung der Molekülketten führt. In Längsrichtung wird vorzugsweise 4:1 bis 9:1 und in Querrichtung 6:1 bis 10:1, vorzugsweise 6:1 bis 8:1, gestreckt. Das Längsstrecken wird man zweckmäßigerweise mit Hilfe zweier entsprechend dem angestrebten Streckverhältnis verschieden schnellaufender Walzen durchführen und das Querstrecken mit Hilfe eines entsprechenden Kluppenrahmens. Zweckmäßigerweise wird die Folie nicht hochquerverstreckt. Zur Erzielung der erfindungswesentlichen Schrumpfeigenschaften ist ein Verhältnis der Streckverhältnisse von quer/längs von kleiner 2, vorzugsweise kleiner 1,5, einzuhalten. Besonders bevorzugt liegt dieses Verhältnis im Bereich von 0,5 bis 1,5.

An die biaxiale Streckung der Folie schließt sich ihre Thermofixierung (Wärmebehandlung) an, wobei die Folie etwa 0,5 bis 10 s lang bei einer Temperatur von 40 bis 130 °C, vorzugsweise von 40 bis 100 °C, gehalten wird. Anschließend wird die Folie in üblicher Weise mit einer Aufwickeleinrichtung aufgewickelt.

Es hat sich als günstig erwiesen, die Abzugswalze oder -walzen, durch die die ausgepreßte Folie auch abgekühlt und verfestigt wird, durch einen Heiz- und Kühlkreislauf bei einer Temperatur von 10 bis 100 °C, vorzugsweise 20 bis 60 °C, zu halten.

Darüber hinaus wird die Längsstreckung vorteilhafterweise bei einer Temperatur von weniger als 130 °C, vorzugsweise im Bereich von 80 bis 120 °C, und die Querstreckung bei einer Temperatur größer 80 °C, vorzugsweise bei 90 bis 140 °C, durchgeführt.

Gegebenenfalls kann/können wie oben erwähnt nach der biaxialen Streckung eine oder beide Oberfläche/n der Folie nach einer der bekannten Methoden corona- oder flammbehandelt werden. Die Behandlungsintensität liegt im Bereich von 38 bis 42 mN/m.

Bei der Coronabehandlung wird zweckmäßigerweise so vorgegangen, daß die Folie zwischen zwei als Elektroden dienenden Leiterelementen hindurchgeführt wird, wobei zwischen den Elektroden eine so hohe Spannung, meist Wechselspannung (etwa 5 bis 20 kV und 5 bis 30 kHz), angelegt ist, daß Sprüh- oder Coronaentladungen stattfinden können. Durch die Sprüh- oder Coronaentladung wird die Luft oberhalb der Folienoberfläche ionisiert und reagiert mit den Molekülen der Folienoberfläche, so daß polare Einlagerungen in der im wesentlichen unpolaren Polymermatrix entstehen.

Für eine Flammbehandlung mit polarisierter Flamme (vgl. US-A-4,622,237) wird eine elektrische Gleichspannung zwischen einem Brenner (negativer Pol) und einer Kühlwalze angelegt. Die Höhe der angelegten Spannung beträgt zwischen 500 und 3 000 V, vorzugsweise liegt sie im Bereich von 1 500 bis 2 000 V. Durch die angelegte Spannung erhalten die ionisierten Atome eine erhöhte Beschleunigung und treffen mit größerer kinetischer Energie auf die Polymeroberfläche. Die chemischen Bindungen innerhalb des Polymermoleküls werden leichter aufgebrochen, und die Radikalbildung geht schneller vonstatten. Die thermische Belastung des Polymeren ist hierbei weitaus geringer als bei der Standardflammbehandlung, und es können Folien erhalten werden, bei denen die Siegeleigenschaften der behandelten Seite sogar besser sind als diejenigen der nicht behandelten Seite.

Die erfindungsgemäße Mehrschichtfolie zeichnet sich durch eine sehr homogene Folienoptik, einen charakteristischen matten Glanz und hervorragende Schrumpfeigenschaften aus. Darüber hinaus läuft die Folie ausgezeichnet auf automatischen Verpackungsmaschinen. Die Folie hat sehr gute antistatische Eigenschaften.

Überraschenderweise hat sich gezeigt, daß die erfindungsgemäße Folie mit der im Anspruch 1 definierten Schrumpfcharakteristik und Deckschichtzusammensetzung ein hervorragendes Schrumpfvermögen aufweist. Sie zeigt eine deutlich engere, falten- und wellenfreie Verpackung als herkömmliche Folien durch den stark anwachsenden, nahezu isotropen Schrumpf auch bei erhöhter Temperatur. Die enge, falten- und wellenfreie Verpackung in Kombination mit dem charakteristischen matten Aussehen gewährleistet ein wesentlich attraktiveres, werbewirksames Aussehen.

Zusätzlich zu den hervorragenden Schrumpfeigenschaften zeichnet sich die Folie durch eine gleichmäßige matte Optik aus.

Die erfindungsgemäßen Folien zeigen dann das gewünschte optische Erscheinungsbild 'matt', wenn die Folie eine möglichst gleichmäßige Optik aufweist und wenn Glanz und Trübung der Folien geringe bzw. relativ hohe Meßwerte haben (in Relation zu 'transparenten' Folien), aber nicht minimal bzw. maximal sind. Es wurde gefunden, daß Folien mit Glanzwerten (bei einem Meßwinkel von 85°, gemessen nach ASTM-D-523-78) von kleiner 80, vorzugsweise kleiner 60, und einer Trübung (gemessen nach ASTM-D-1003) von größer 10, vorzugsweise größer 30, matt sind, wobei die jeweiligen Werte für Glanz und Trübung bei einer Ausführungsform nur innerhalb relativ enger Grenzen schwanken, d. h. maximal um 20 %. Besonders gut wird diese Anforderung erfüllt, wenn der Glanz im Bereich von 25 bis 45 (85°, ASTM-D-5237) und die Trübung im Bereich von 40 bis 80, vorzugsweise 50 bis 70, liegen und die Schwankungen von Glanz und Trübung über die gesamte Folie kleiner 20 %, vorzugsweise 1 bis 10 %, betragen.

Es wurde gefunden, daß die Maschinengängigkeit der Schrumpffolien wesentlich verbessert werden konnte, wobei die Folien gleichzeitig eine hervorragende Antistatik aufweisen.

Besonders vorteilhaft ist die Schrumpffolie bezüglich ihrer Rollenaufmachung. Die Folie zeigt eine deutlich verringerte Neigung zum Teleskopieren und ein sehr gutes Wickelverhalten.

Zusammenfassend ist festzustellen, daß sich die erfindungsgemäße Mehrschichtfolie durch eine Vielzahl vorteilhafter Eigenschaften auszeichnet, welche sie für ihren bevorzugten Verwendungszweck als hochschrumpffähige Verpackungsfolie besonders geeignet macht, insbesondere durch

- sehr gute Schrumpfeigenschaften,
- eine gleichmäßige matte Folienoptik,
- eine gute Maschinengängigkeit,
- gute antistatische Eigenschaften,
- gute Rollenaufmachung und
- sehr gute Konfektionierbarkeit.

Die ausgezeichneten Schrumpfeigenschaften gewährleisten eine enge, falten- und wellenfreie Verpackung. Gleichzeitig erfüllt die Folie alle weiteren Anforderungen, wie sie an Verpackungsmaterialien gestellt werden. Die Schrumpffolie ist gut auf schnellaufenden Verpackungsmaschinen zu verarbeiten und hat gute antistatische Eigenschaften. Sie weist eine besonders gleichmäßige matte Folienoptik auf. Darüber hinaus läßt sich die Folie insbesondere nach einer Corona- oder Flammbehandlung ausgezeichnet bedrucken oder auch metallisieren oder kaschieren. Damit eignet sich die erfindungsgemäße Folie hervorragend für ihren vorgesehenen Verwendungszweck als Verpackungsfolie mit einem besonders breiten Anwendungsbereich, beispielsweise als Folienverpackung für Bücher, Rahmen, Spielsachen, Lebensmittel, Kosmetika, etc.

Die Erfindung wird nun anhand von Ausführungsbeispielen gemäß der nachstehenden Tabelle 1 noch näher erläutert.

Tabelle 1

| | | Komponente I | Komponente II | I:II |
|---|---|---|---|---|
| | B1 | $C_3$-Homopolymerisat | HDPE + $C_3$-Homopolmyerisat | 50:50 |
| | B2 | $C_2/C_3$-Copolymerisat | HDPE + $C_3$-Homopolymerisat | 50:50 |
| | B3 | $C_2/C_3$-Copolymerisat | HDPE + $C_3$-Homopolymerisat | 70:30 |
| | B4 | $C_2/C_3/C_4$-Terpolymerisat + $C_3/C_4$-Copolymerisat | HDPE + $C_2/C_3$-Copolymerisat | 60:40 |
| | B5 | $C_2/C_3$-Copolymerisat | HDPE + $C_2/C_3$-Copolymerisat | 50:50 |
| | B6 | $C_2/C_3$-Copolymerisat | HDPE + $C_2/C_3$-Copolymerisat | 70:30 |
| | B7 | $C_2/C_3$-copolymerisat | HDPE + $C_2/C_3/C_4$-Terpolymerisat | 50:50 |
| | B8 | $C_2/C_3$-Copolymerisat | HDPE + $C_2/C_3/C_4$-Terpolymerisat | 70:30 |
| | B9 | $C_2/C_3$-Copolymerisat | HDPE + $C_2/C_3/C_4$-Terpolymerisat + $C_3/C_4$ Copolymerisat | 50:50 |
| | B10 | $C_2/C_3/C_4$-Terpolymerisat | HDPE + $C_2/C_3/C_4$-Terpolymerisat + $C_3/C_4$-Copolymerisat | 50:50 |
| | B11 | $C_2/C_3/C_4$-Terpolymerisat | HDPE + $C_2/C_3/C_4$-Terpolymerisat | 50:50 |
| | B12 | $C_3$-Homopolymerisat | HDPE | 50:50 |

Tabelle 1 (fortgesetzt)

| | Komponente I | Komponente II | I:II |
|---|---|---|---|
| B13 | $C_2/C_3$-Copolymerisat | HDPE | 50:50 |
| B14 | $C_2/C_3$-Copolymerisat | HDPE | 70:30 |
| B15 | $C_2/C_3/C_4$-Terpolymerisat | HDPE | 50:50 |
| B16 | $C_2/C_3/C_4$-Terpolymerisat | HDPE | 70:30 |
| B = Beispiel | | | |

**Beispiel 1**

Nach dem Coextrusionsverfahren wurde aus einer Breitschlitzdüse bei einer Extrusionstemperatur von 230 °C als Summe eine 1 mm dicke Dreischichtfolie mit einem Schichtaufbau XZX extrudiert, d. h. die Basisschicht Z war von zwei gleichen Deckschichten X umgeben.

Die Basisschicht bestand im wesentlichen aus einem statistischen Propylen-Ethylen-Copolymeren mit einem Ethylengehalt von 4,5 Gew.-%, einem Schmelzpunkt von 134 °C und einem Schmelzflußindex von 7,0 g/10 min bei 230 °C und 21,6 N (DIN 53 735).

Zusätzlich enthielt die Basisschicht 0,2 Gew.-% eines N,N-bis(hydroxyethyl)-($C_{10}$-$C_{20}$)-alkylamins (®Armostat 300) und 0,05 Gew.-% Erucasäureamid.

Die beiden Deckschichten X bestanden im wesentlichen aus einer mechanischen Mischung aus den Komponenten I und II im Verhältnis I:II = 50:50.

Komponente I bestand aus einem Propylenhomopolymerisat mit einem n-heptanlöslichen Anteil von 4,5 Gew.-% und einem Schmelzpunkt von 165 °C. Der Schmelzflußindex des Propylenhomopolymeren lag bei 6,0 g/10 min bei 230 °C und 21,6 N Belastung (DIN 53 735).

Komponente II bestand aus einem Blend zweier Komponenten A und B im Verhältnis A:B = 50:50. Die Komponente A bestand aus einem HDPE mit einem MFI (50 N/190 °C) von 11 g/10 min (gemessen nach DIN 53 735), einer Viskositätszahl von 160 $cm^3$/g (gemessen nach DIN 53 728, Teil 4), einer Dichte von 0,954 g/$cm^3$ (gemessen nach DIN 53 479, Verfahren A), einem Kristallisationsgrad von 68 % und einem Schmelzpunkt von 132 °C nach DSC-Messung. Die Komponente B bestand aus einem Propylenhomopolymerisat mit einem n-heptanlöslichen Anteil von 4,5 Gew.-% und einem Schmelzpunkt von 165 °C. Der Schmelzflußindex der Komponente B lag bei 7,0 g/10 min bei 230 °C und 21,6 N Belastung (DIN 53 735).

Die Komponenten I und II wurden im Verhältnis I:II = 50:50 in einem Henschel-Mischer 2 min lang bei 500 Upm mechanisch gemischt, so daß eine homogene Granulatmischung resultiert.

Alle Schichten enthielten zur Stabilisierung 0,12 Gew.-% Pentaerythrityl-Tetrakis-4-(3,5-ditertiärbutyl-4-hydroxyphenyl)-propionat (®lrganox 1010) sowie als Neutralisationsmittel 0,06 Gew.-% Calciumstearat.

Die extrudierte Dreischichtfolie wurde über die entsprechenden Verfahrensschritte nach der Coextrusion über eine Abzugswalze abgezogen und abgekühlt, anschließend längsgestreckt, quergestreckt, fixiert und coronabehandelt, wobei im einzelnen die folgenden Bedingungen gewählt wurden:

| | |
|---|---|
| Extrusion: | Extrusionstemperatur 230 °C |
| | Temperatur der Abzugswalze 40 °C |
| Längsstreckung: | Streckwalze T = 100 °C |
| | Längsstreckung um den Faktor 6,5 |
| Querstreckung: | Aufheizfelder T = 115 °C |
| | Streckfelder T = 115 °C |
| | Querstreckung um den Faktor 7,5 |
| Fixierung: | Temperatur T = 70 °C |
| Coronabehandlung: | Spannung: 10 000 V |
| | Frequenz: 10 000 Hz |

Die so hergestellte Mehrschichtfolie hatte beidseitig eine matte Oberfläche und wies direkt nach der Herstellung eine Oberflächenspannung von 40 bis 41 mN/m auf.

Die Folie war nahezu isotrop orientiert und wies ein hervorragendes Schrumpfvermögen auf.

Die Folie war ca. 21 μm dick, wobei die Basisschicht 19 μm und jede Deckschicht 1 μm Dicke hatte.

**Beispiel 2**

Beispiel 1 wurde wiederholt. Komponente I bestand aus einem statistischen Ethylen-Propylen-Copolymeren mit einem Ethylengehalt von 5 Gew.-%, bezogen auf das Gewicht des Copolymeren. Der Schmelzpunkt des Copolymeren lag bei 134 °C, wobei der Schmelzflußindex 7,0 g/10 min betrug.

**Beispiel 3**

Beispiel 2 wurde wiederholt. Das Mischungsverhältnis der beiden Komponenten I und II betrug 1:11 = 70:30.

**Beispiel 4**

Beispiel 1 wurde wiederholt.

Komponente I bestand aus einem Polymerblend aus einem Ethylen-Propylen-Butylen-1-Terpolymeren und einem Propylen-Butylen-1-Copolymeren entsprechend einem Gehalt von 0,7 Gew.-% Ethylen, 81,3 Gew.-% Propylen und 18 Gew.-% Butylen, bezogen auf das Polymerblend.

Komponente II bestand aus einem Blend zweier Komponenten A und B im Verhältnis A:B = 50:50. Die Komponente A bestand aus einem HDPE mit einem MFI (50 N/190 °C) von 11 g/10 min (gemessen nach DIN 53 735), einer Viskositätszahl von 160 cm$^3$/g (gemessen nach DIN 53 728, Teil 4), einer Dichte von 0,954 g/cm$^3$ (gemessen nach DIN 53 479, Verfahren A), einem Kristallisationsgrad von 68 % und einem Schmelzpunkt von 132 °C nach DSC-Messung. Die Komponente B bestand aus einem statistischen Ethylen-Propylen-Copolymeren mit einem Ethylengehalt von 5 Gew.-%, bezogen auf das Gewicht des Copolymeren. Der Schmelzpunkt des Copolymeren lag bei 134 °C, wobei der Schmelzflußindex 7,0 g/10 min betrug.

Das Mischungsverhältnis der beiden Komponenten I und II betrug I:II = 60:40.

**Beispiel 5**

Beispiel 4 wurde wiederholt. Komponente I bestand aus einem statistischen Ethylen-Propylen-Copolymeren mit einem Ethylengehalt von 5 Gew.-%, bezogen auf das Gewicht des Copolymeren. Der Schmelzpunkt des Copolymeren lag bei 134 °C, wobei der Schmelzflußindex 7,0 g/10 min betrug.

Das Mischungsverhältnis der beiden Komponenten I und II betrug I:II = 50:50.

**Beispiel 6**

Beispiel 5 wurde wiederholt. Das Mischungsverhältnis der beiden Komponenten I und II betrug I:II = 70:30.

**Beispiel 7**

Beispiel 5 wurde wiederholt. Komponente II bestand aus einem Blend zweier Komponenten A und B im Verhältnis A:B = 50:50. Die Komponente A bestand aus einem HDPE mit einem MFI (50 N/190 °C) von 11 g/10 min (gemessen nach DIN 53 735), einer Viskositätszahl von 160 cm$^3$/g (gemessen nach DIN 53 728, Teil 4), einer Dichte von 0,954 g/cm$^3$ (gemessen nach DIN 53 479, Verfahren A), einem Kristallisationsgrad von 68 % und einem Schmelzpunkt von 132 °C nach DSC-Messung. Die Komponente B bestand aus einem Terpolymeren aus Ethylen-, Propylen- und Butylen-1-Einheiten mit einem Ethylengehalt von 1,9 Gew.-% und einem Butylen-1-Gehalt von 8,4 Gew.-%, bezogen auf das Terpolymer.

**Beispiel 8**

Beispiel 7 wurde wiederholt. Das Mischungsverhältnis der beiden Komponenten I und II betrug I:II = 70:30.

**Beispiel 9**

Beispiel 5 wurde wiederholt. Komponente II bestand aus einem Blend zweier Komponenten A und B im Verhältnis A:B = 50:50. Die Komponente A bestand aus einem HDPE mit einem MFI (50 N/190 °C) von 11 g/10 min (gemessen nach DIN 53 735), einer Viskositätszahl von 160 cm$^3$/g (gemessen nach DIN 53 728, Teil 4), einer Dichte von 0,954 g/cm$^3$ (gemessen nach DIN 53 479, Verfahren A), einem Kristallisationsgrad von 68 % und einem Schmelzpunkt von 132 °C nach DSC-Messung. Die Komponente B bestand aus einem Polymerblend aus einem Ethylen-Propylen-Butylen-1-Terpolymeren und einem Propylen-Butylen-1-Copolymeren entsprechend einem Gehalt von 0,7 Gew.-% Ethylen, 81,3 Gew.-% Propylen und 18 Gew.-% Butylen, bezogen auf das Polymerblend.

**Beispiel 10**

Beispiel 9 wurde wiederholt. Komponente I bestand aus einem Terpolymeren aus Ethylen-, Propylen- und Butylen-1-Einheiten mit einem Ethylengehalt von 1,9 Gew.-% und einem Butylen-1-Gehalt von 8,4 Gew.-%, bezogen auf das Terpolymer.

**Beispiel 11**

Beispiel 7 wurde wiederholt. Komponente I bestand aus einem Terpolymeren aus Ethylen-, Propylen- und Butylen-1-Einheiten mit einem Ethylengehalt von 1,9 Gew.-% und einem Butylen-1-Gehalt von 8,4 Gew.-%, bezogen auf das Terpolymer.

**Beispiel 12**

Beispiel 1 wurde wiederholt. Die Komponente II bestand aus dem reinen HDPE mit einem MFI (50 N/190 °C) von 11 g/10 min (gemessen nach DIN 53 735), einer Viskositätszahl von 160 cm$^3$/g (gemessen nach DIN 53 728, Teil 4), einer Dichte von 0,954 g/cm$^3$ (gemessen nach DIN 53 479, Verfahren A), einem Kristallisationsgrad von 68 % und einem Schmelzpunkt von 132 °C nach DSC-Messung.

**Beispiel 13**

Beispiel 2 wurde wiederholt. Die Komponente II entsprach der des Beispiels 12.

**Beispiel 14**

Beispiel 3 wurde wiederholt. Die Komponente II entsprach der des Beispiels 12.

**Beispiel 15**

Beispiel 11 wurde wiederholt. Die Komponente II entsprach der des Beispiels 12.

**Beispiel 16**

Beispiel 15 wurde wiederholt. Das Mischungsverhältnis der beiden Komponenten I und II betrug I:II = 70:30.

**Beispiel 17**

Beispiel 2 wurde wiederholt. Die Basisschicht bestand im wesentlichen aus einem Propylen-Ethylen-Butylen-1-Terpolymeren mit einem Ethylengehalt von 1,9 Gew.-% und einem Butylen-1-Gehalt von 8,4 Gew.-%, bezogen auf das Terpolymer. Das Terpolymere hatte einen Schmelzflußindex von 55 g/10 min bei 230 °C und 21,6 N (DIN 53 735) und einen Schmelzpunkt von 135 °C.
Zur Charakterisierung der Rohstoffe und der Folien wurden die folgenden Meßmethoden benutzt:

Schmelzflußindex

Der Schmelzflußindex wurde in Anlehnung an DIN 53 735 bei 21,6 N Belastung und 230 °C bzw. bei 50 N Belastung und 190 °C gemessen.

Schmelzpunkt

DSC-Messung, Maximum der Schmelzkurve, Aufheizgeschwindigkeit 20 °C/min.

Viskositätszahl J

Die Viskositätszahl ist ein Maß für die Molmasse. Die Viskositätszahl wird nach DIN 53 728, Teil 4, in 0,1%iger Dekahydronaphthalin-Lösung bei 135 °C gemessen.

Dichte ρ

Die Dichte wird nach DIN 53 479, Verfahren A, bestimmt.

Kristallisationsgrad α

Der Kristallisationsgrad läßt sich durch folgende Beziehung ermitteln:

$$\alpha = \frac{\rho - \rho_{amorph}}{\rho_{kristallin} - \rho_{amorph}} \cdot 100\ \%$$

mit

$\rho_{amorph}$ =  0,8549 g/cm$^3$

$\rho_{kristallin}$ =  1,0005 g/cm$^3$

ρ =  Dichte des eingesetzten HDPE-Typs

Trübung

Die Trübung der Folie wurde in Anlehnung an ASTM-D 1003-52 gemessen.

Glanz

Der Glanz wurde nach DIN 67 530 bestimmt. Gemessen wurde der Reflektorwert als optische Kenngröße für die Oberfläche einer Folie. Angelehnt an die Normen ASTM-D 523-78 und ISO 2813 wurde der Einstrahlwinkel mit 60° oder 85° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Meßwert ist dimensionslos und muß mit dem Einstrahlwinkel angegeben werden.

Rauhigkeit

Die Rauhigkeit wurde in Anlehnung an DIN 4768 bestimmt.

Reibung

Die Reibung wurde in Anlehnung an DIN 53 375 bestimmt.

Oberflächenspannung

Die Oberflächenspannung wurde mittels der sogenannten Tintenmethode (DIN 53 364) bestimmt.

Bedruckbarkeit

Die coronabehandelten Folien wurden 14 Tage nach ihrer Produktion (Kurzzeitbeurteilung) bzw. 6 Monate nach ihrer Produktion (Langzeitbeurteilung) bedruckt. Die Farbhaftung wurde mittels Klebebandtest beurteilt. Konnte mittels Klebeband wenig Farbe abgelöst werden, so wurde die Farbhaftung mit mäßig und bei deutlicher Farbablösung mit schlecht beurteilt.

Schrumpf:

Die Längs- und Querschrumpfwerte beziehen sich auf die jeweilige Längenausdehnung der Folie (längs $L_0$ und quer $Q_0$) vor dem Schrumpfprozeß. Die Längsrichtung ist die Maschinenrichtung, als Querrichtung wird entsprechend die Richtung quer zum Maschinenlauf definiert. Der Probekörper wird im Umluftofen bei der jeweiligen Temperatur (90 bzw. 120 °C) über eine Dauer von 15 min geschrumpft. Anschließend werden die verbliebenen Längenausdehnungen des Probekörpers längs und quer erneut bestimmt ($L_1$ und $Q_1$). Als Schrumpf wird dann die Differenz der ermittelten Längenausdehnungen im Verhältnis zur ursprünglichen Länge $L_0$ und $Q_0$ angegeben.

$$\text{Längsschrumpf } L_s = \frac{L_0\text{-}L_1}{L_0}$$

$$\text{Querschrumpf } Q_s = \frac{Q_0\text{-}Q_1}{Q_0}$$

Diese Bestimmungsmethode für den Längs- und Querschrumpf entspricht DIN 404 34.

Maschinengängigkeit:

Die Bestimmung der Maschinengängigkeit auf der Einschlagmaschine erfolgte visuell und wurde wie folgt bewertet:

| | | |
|---|---|---|
| sehr gut (++) | < 2 % | der Probepäckchen sind mangelhaft eingeschlagen |
| gut (+) | 2-6 % | der Probepäckchen sind mangelhaft eingeschlagen |
| mäßig (+-) | 6-12 % | der Probepäckchen sind mangelhaft eingeschlagen |
| schlecht (-) | 12 % | und mehr der Probepäckchen sind mangelhaft einge schlagen |

In der nachstehenden Tabelle 2 sind die Eigenschaften der Polypropylenfolien der Beispiele zusammengefaßt.

# Tabelle 2

| Beispiel | Glanz (ASTM D-523-78) Meßwinkel 85° | Trübung (ASTM 1003) % | Rauhigkeit (c.o. 0,25 mm) μm | Reibungs-koeffizient - | Oberflächenspannung nach 6 Monaten Lagerung mN/m | visuelle Beurteilung des - matten Erscheinungsbildes (+ + = sehr gut) | Schrumpf 120 °C % längs | quer |
|---|---|---|---|---|---|---|---|---|
| B1 | 40 | 60 | 2,5 | 0,5 | 38 | + + | 35 | 42 |
| B2 | 32 | 66 | 3,0 | 0,4 | 39 | + + | 33 | 44 |
| B3 | 42 | 58 | 2,3 | 0,5 | 38 | + + | 36 | 43 |
| B4 | 38 | 62 | 2,6 | 0,4 | 39 | + + | 32 | 41 |
| B5 | 30 | 68 | 3,2 | 0,3 | 39 | + + | 34 | 43 |
| B6 | 38 | 63 | 2,6 | 0,4 | 39 | + + | 34 | 44 |
| B7 | 32 | 65 | 2,9 | 0,4 | 39 | + + | 35 | 43 |
| B8 | 38 | 62 | 2,7 | 0,4 | 39 | + + | 36 | 41 |

## Tabelle 2 (Fortsetzung)

| Beispiel | Glanz (ASTM D-523-78) Meßwinkel 85° | Trübung (ASTM 1003) % | Rauhigkeit (c.o. 0,25 mm) µm | Reibungs-koeffizient - | Oberflächenspannung nach 6 Monaten Lagerung mN/m | visuelle Beurteilung des matten Erscheinungsbildes (++ = sehr gut) | Schrumpf 120 °C % längs | Schrumpf 120 °C % quer |
|---|---|---|---|---|---|---|---|---|
| B9 | 34 | 63 | 3,3 | 0,4 | 39 | ++ | 35 | 41 |
| B10 | 36 | 62 | 2,6 | 0,4 | 39 | ++ | 31 | 43 |
| B11 | 35 | 62 | 2,6 | 0,4 | 39 | ++ | 29 | 44 |
| B12 | 31 | 68 | 3,0 | 0,4 | 38 | ++ | 32 | 43 |
| B13 | 29 | 70 | 3,2 | 0,3 | 39 | ++ | 34 | 41 |
| B14 | 32 | 66 | 2,8 | 0,3 | 39 | ++ | 35 | 44 |
| B15 | 30 | 68 | 3,0 | 0,3 | 39 | ++ | 33 | 42 |
| B16 | 34 | 64 | 2,8 | 0,4 | 39 | ++ | 34 | 44 |
| B17 | 32 | 70 | 3,0 | 0,4 | 39 | ++ | 36 | 47 |

**Patentansprüche**

1. Biaxial orientierte Polypropylen-Mehrschichtfolie mit hohem Schrumpf, welche mindestens eine Basisschicht enthaltend Polypropylen oder eine Polypropylenmischung und mindestens eine Deckschicht umfaßt, welche eine Mischung oder ein Blend zweier Komponenten I und II enthält, **dadurch gekennzeichnet, daß**

   das Verhältnis (Gewichtsverhältnis) der beiden Komponenten I und II zwischen I:II = 10-90 und I:II = 90-10 liegt und

18

die Komponente I im wesentlichen

ein Propylenhomopolymeres oder
ein Copolymeres von

Ethylen und Propylen oder
Ethylen und Butylen oder
Propylen und Butylen oder
Ethylen und einem anderen -Olefin mit 5 bis 10 Kohlenstoffatomen oder
Propylen und einem anderen -Olefin mit 5 bis 10 Kohlenstoffatomen oder

ein Terpolymeres von

Ethylen und Propylen und Butylen oder
Ethylen und Propylen und einem anderen -Olefin mit 5 bis 10 Kohlenstoffatomen oder

eine Mischung aus zwei oder mehreren der genannten Homo-, Co- und Terpolymeren oder
ein Blend aus zwei oder mehreren der genannten Homo-, Co- und Terpolymeren, gegebenenfalls gemischt
mit einem oder mehreren der genannten Homo-, Co- und Terpolymeren,

enthält und
die Komponente II im wesentlichen ein HDPE mit einem Schmelzflußindex MFI, gemessen nach DIN 53 735
von größer 1 bis 45 g/10min oder ein Blend zweier Blendkomponenten A und B enthält, wobei
das Verhältnis (Gewichtsverhältnis) der beiden Blendkomponenten A und B zwischen A:B = 20-80 und A:B =
80-20 liegt und
die Blendkomponente A im wesentlichen

ein HDPE mit einem Schmelzflußindex MFI, gemessen nach DIN 53 735 von größer 1 bis 45 g/10min ist
und

die Blendkomponente B im wesentlichen

ein Propylenhomopolymeres oder
ein Copolymeres von

Ethylen und Propylen oder
Ethylen und Butylen oder
Propylen und Butylen oder
Ethylen und einem anderen -Olefin mit 5 bis 10 Kohlenstoffatomen oder
Propylen und einem anderen -Olefin mit 5 bis 10 Kohlenstoffatomen oder

ein Terpolymeres von

Ethylen und Propylen und Butylen oder
Ethylen und Propylen und einem anderen -Olefin mit 5 bis 10 Kohlenstoffatomen oder

eine Mischung aus zwei oder mehreren der genannten Homo-, Co- und Terpolymeren oder
ein Blend aus zwei oder mehreren der genannten Homo-, Co- und Terpolymeren

ist, und
die Mehrschichtfolie bei 120°C einen Längsschrumpf von größer 20 %, vorzugsweise von 25 bis 50 %, und
einen Querschrumpf von größer 25 %, vorzugsweise von 30 bis 60 %, aufweist, und die Folie Streckung in
Längs- und Querrichtung orientiert wird, wobei das Verhältnis des Streckverhältnisse von quer/längs kleiner
als ist und die Folie matt ist.

2. Polypropylen-Mehrschichtfolie gemäß Anspruch 1, **dadurch gekennzeichnet, daß**

die Komponente I im wesentlichen

ein Propylenhomopolymeres oder
ein Copolymeres von

Ethylen und Propylen oder
Ethylen und Butylen-1 oder
Propylen und Butylen-1 oder

ein Terpolymeres von

Ethylen und Propylen und Butylen-1 oder

eine Mischung aus zwei oder mehreren der genannten besonders bevorzugten Homo-, Co- Terpolymeren oder
ein Blend aus zwei oder mehreren der genannten besonders bevorzugten Homo-, Co- und Terpolymeren, gegebenenfalls gemischt mit einem oder mehreren der genannten Homo-, Co- und Terpolymeren,
wobei insbesondere

Polypropylenpolymer oder statistische Ethylen-Propylen-Copolymere mit

einem Ethylengehalt von 2 bis 10 Gew.-%, bevorzugt 5 bis 8 Gew.-%, oder

statistische Propylen-Butylen-1-Copolymere mit

einem Butylengehalt von 5 bis 40 Gew.-%, bevorzugt 20 bis 30 Gew.-%,

jeweils bezogen auf das Gesamtgewicht des Copolymeren, oder statistische Ethylen-Propylen-Butylen-1-Terpolymere mit

einem Ethylengehalt von 1 bis 10 Gew.-%, bevorzugt 2 bis 6 Gew.-%, und
einem Butylen-1-Gehalt von 3 bis 20 Gew.-%, bevorzugt 8 bis 10 Gew.-%,
jeweils bezogen auf das Gesamtgewicht des Terpolymeren, oder

ein Blend aus einem Ethylen-Propylen-Butylen-1-Terpolymeren und einem Propylen-Butylen-1-Copolymeren

mit einem Ethylengehalt von 0,1 bis 7 Gew,-%
und einem Propylengehalt von 50 bis 90 Gew.-%
und einem Butylen-1-Gehalt von 10 bis 40 Gew.-%,
jeweils bezogen auf das Gesamtgewicht des Polymerblends,

bevorzugt sind, und
die Blendkomponente B im wesentlichen

Polypropylenhomopolymeres oder ein Copolymeres von

Ethylen und Propylen oder
Ethylen und Butylen-1 oder
Propylen und Butylen-1 oder

ein Terpolymeres von

Ethylen und Propylen und Butylen-1 oder

eine Mischung aus zwei oder mehreren der genannten besonders bevorzugten Homo-, Co- und Terpolymeren oder
ein Blend aus zwei oder mehreren der genannten besonders bevorzugten Homo-, Co- und Terpolymeren,
wobei insbesondere

Polypropylenpolymer oder statistische Ethylen-Propylen-Copolymere mit

einem Ethylengehalt von 2 bis 10 Gew.-%, bevorzugt 5 bis 8 Gew.-%, oder

statistische Propylen-Butylen-1-Copolymere mit

einem Butylengehalt von 5 bis 40 Gew.-%, bevorzugt 20 bis 30 Gew.-%,

jeweils bezogen auf das Gesamtgewicht des Copolymeren, oder statistische Ethylen-Propylen-Butylen-1-Terpolymere mit

einem Ethylengehalt von 1 bis 10 Gew.-%, bevorzugt 2 bis 6 Gew.-%, und
einem Butylen-1-Gehalt von 3 bis 20 Gew.-%, bevorzugt 8 bis 10 Gew.-%,
jeweils bezogen auf das Gesamtgewicht des Terpolymeren, oder

ein Blend aus einem Ethylen-Propylen-Butylen-1-Terpolymeren und einem Propylen-Butylen-1-Copolymeren

mit einem Ethylengehalt von 0,1 bis 7 Gew,-%
und einem Propylengehalt von 50 bis 90 Gew,-%
und einem Butylen-1-Gehalt von 10 bis 40 Gew.-%,
jeweils bezogen auf das Gesamtgewicht des Polymerblends, bevorzugt sind.

3. Polypropylen-Mehrschichtfolie gemäß Anspruch 1 und/oder 2, **dadurch gekennzeichnet, daß** das HDPE eine Viskositätszahl von 100 bis 450 cm$^3$/g (gemessen nach DIN 53 728, Teil 4), eine Dichte von 0,93 bis 0,97 g/cm$^3$ (gemessen nach DIN 53 479, Verfahren A), einen Kristallisationsgrad von 35 bis 80 % und einen Schmelzpunkt von 120 bis 150°C nach DSC-Messung aufweist.

4. Polypropylen-Mehrschichtfolie gemäß einem oder mehreren der Ansprüche 1 bis 3, **dadurch gekennzeichnet, daß** das Verhältnis der Blendkomponenten A und B im Bereich von A:B = 40:60 und A:B = 60:40, liegt.

5. Polypropylen-Mehrschichtfolie gemäß einem oder mehreren der Ansprüche 1 bis 4, **dadurch gekennzeichnet, daß** das Blend aus den Komponenten A und B einen Schmelzflußindex von 1,5 bis 12 g/10 min, vorzugsweise 2,5 bis 6 g/10 min, (230°C, 21,6 N Belastung) hat.

6. Polypropylen-Mehrschichtfolie gemäß einem oder mehreren der Ansprüche 1 bis 5, **dadurch gekennzeichnet, daß** das Polypropylen oder die Polypropylenmischung der Basisschicht ein Propylencopolymer und/oder ein Propylenterpolymer ist.

7. Verfahren zur Herstellung der Polypropylen-Mehrschichtfolie gemäß Anspruch 1, bei dem die den einzelnen Schichten der im Anspruch 1 definierten Folie entsprechenden Schmelzen durch eine Flachdüse coextrudiert werden, die coextrudierte Folie über eine Abzugswalze, deren Temperatur zwischen 20 und 100°C liegt, abgezogen wird, die Folie biaxial gestreckt wird mit einem Längsstreckverhältnis von 4:1 bis 9:1 und einem Querstreckverhältnis von 6:1 bis 10:1,
wobei das Verhältnis der Streckverhältnisse von quer/längs kleiner als 2 ist und die biaxial gestreckte Folie anschließend thermofixiert, gegebenenfalls coronabehandelt und anschließend aufgewickelt wird, **dadurch gekennzeichnet, daß** die Folie mindestens eine matte Oberfläche aufweist.

8. Verfahren gemäß Anspruch 7, **dadurch gekennzeichnet, daß** die Längsstreckung der Folie bei 80 bis 120°C und die Querstreckung bei 90 bis 140°C durchgeführt wird.

9. Verfahren gemäß Anspruch 7 und/oder 8, **dadurch gekennzeichnet, daß** das Verhältnis von Querstreckverhältnis $Q_s$ zu Längsstreckverhältnis $L_s$, d. h. $Q_s$: $L_s$, 0,5 bis 1,5, ist.

10. Verfahren gemäß einem oder mehreren der Ansprüche 7 bis 9, **dadurch gekennzeichnet, daß** die Folie balanced orientiert ist.

11. Verwendung der Polypropylen-Mehrschichtfolie gemäß einem oder mehreren der Ansprüche 1 bis 6 als hochschrumpffähige Verpackung.

**12.** Verpackung enthaltend eine Polypropylen-Mehrschichtfolie gemäß einem oder mehreren der Ansprüche 1 bis 6.

**Claims**

**1.** Biaxially oriented multilayer polypropylene film of high shrinkage that comprises at least one base layer comprising polypropylene or a polypropylene mixture, and at least one outer layer comprising a mixture or a blend of two components I and II, **characterised in that**
the ratio (weight ratio) of the two components I and II is from I:II = 10:90 to I:II = 90:10 and
component I essentially comprises

a propylene homopolymer or
a copolymer of

ethylene and propylene or
ethylene and butylene or
propylene and butylene or
ethylene and another $\alpha$-olefin having from 5 to 10 carbon atoms or propylene and another $\alpha$-olefin having from 5 to 10 carbon atoms or

a terpolymer of

ethylene and propylene and butylene or
ethylene and propylene and another $\alpha$-olefin having from 5 to 10 carbon atoms or

a mixture of two or more of the mentioned homo-, co- and ter-polymers or
a blend of two or more of the mentioned homo-, co- and ter-polymers, optionally mixed with one or more of the mentioned homo-, co- and ter-polymers,

and
component II essentially comprises an HDPE having a melt flow index MFI measured according to DIN 53 735 of greater than from I to 45 g/10 min or a blend of two blend components A and B, wherein
the ratio (weight ratio) of the two blend components A and B is from A:B = 20:80 to A:B = 80:20, and
blend component A is substantially

an HDPE having a melt flow index MFI measured according to DIN 53 735 of greater than from I to 45 g/10 min and

blend component B is substantially

a propylene homopolymer or
a copolymer of

ethylene and propylene or
ethylene and butylene or
propylene and butylene or
ethylene and another $\alpha$-olefin having from 5 to 10 carbon atoms or propylene and another $\alpha$-olefin having from 5 to 10 carbon atoms or

a terpolymer of

ethylene and propylene and butylene or
ethylene and propylene and another $\alpha$-olefin having from 5 to 10 carbon atoms or

a mixture of two or more of the mentioned homo-, co- and ter-polymers or
a blend of two or more of the mentioned homo-, co- and ter-polymers,

and
the multilayer film has a longitudinal shrinkage of greater than 20 %, preferably from 25 to 50 %, and a transverse shrinkage of greater than 25 %, preferably from 30 to 60 %, at 120°C,
and the film is oriented by stretching in the longitudinal and transverse direction, the ratio of the transverse stretching ratio to the longitudinal stretching ratio being less than 2
and the film is matt.

2. Multilayer polypropylene film according to claim 1, **characterised in that** component I consists essentially of

a propylene homopolymer or
a copolymer of

ethylene and propylene or
ethylene and 1-butylene or
propylene and 1-butylene or

a terpolymer of

ethylene and propylene and 1-butylene or

a mixture of two or more of the mentioned particularly preferred homo-, co- and ter-polymers or
a blend of two or more of the mentioned particularly preferred homo-, co- and ter-polymers, optionally mixed with one or more of the mentioned homo-, co- and ter-polymers,
with special preference being given to

polypropylene polymer or random ethylene-propylene copolymers having

an ethylene content of from 2 to 10 % by weight, preferably from 5 to 8 % by weight, or

random propylene-1-butylene copolymers having

a butylene content of from 5 to 40 % by weight, preferably from 20 to 30 % by weight,

in each case based on the total weight of the copolymer, or random ethylene-propylene-1-butylene ter-polymers having

an ethylene content of from I to 10 % by weight, preferably from 2 to 6 % by weight, and
a 1-butylene content of from 3 to 20 % by weight, preferably from 8 to 10 % by weight,
in each case based on the total weight of the terpolymer, or a blend of an ethylene-propylene-1-butylene terpolymer and a propylene-1-butylene copolymer
having an ethylene content of from 0.1 to 7 % by weight
and a propylene content of from 50 to 90 % by weight
and a 1-butylene content of from 10 to 40 % by weight,
in each case based on the total weight of the polymer blend,

and
blend component B consists essentially of polypropylene homopolymer or a copolymer of

ethylene and propylene or
ethylene and 1-butylene or
propylene and 1-butylene or
a terpolymer of

ethylene and propylene and 1-butylene or

a mixture of two or more of the mentioned particularly preferred homo-, co- and ter-polymers or
a blend of two or more of the mentioned particularly preferred homo-, co- and ter-polymers,
with special preference being given to polypropylene polymer or random ethylene-propylene copolymers having

an ethylene content of from 2 to 10 % by weight, preferably from 5 to 8 % by weight, or random propylene-1-butylene copolymers having a butylene content of from 5 to 40 % by weight, preferably from 20 to 30 % by weight, in each case based on the total weight of the copolymer, or random ethylene-propylene-1 -butylene terpolymers having

an ethylene content of from I to 10 % by weight, preferably from 2 to 6 % by weight, and a 1-butylene content of from 3 to 20 % by weight, preferably from 8 to 10 % by weight, in each case based on the total weight of the terpolymer, or

a blend of an ethylene-propylene-1-butylene terpolymer and a propylene-1-butylene copolymer

having an ethylene content of from 0.1 to 7 % by weight and a propylene content of from 50 to 90 % by weight and a 1-butylene content of from 10 to 40 % by weight, in each case based on the total weight of the polymer blend.

3. Multilayer polypropylene film according to claim I and/or 2, **characterised in that** the HDPE has a viscosity index of from 100 to 450 cm$^3$/g (measured according to DIN 53 728, Part 4), a density of from 0.93 to 0.97 g/cm$^3$ (measured according to DIN 53 479, Method A), a degree of crystallisation of from 35 to 80 % and a melting point of from 120 to 150°C according to DSC measurement.

4. Multilayer polypropylene film according to one or more of claims I to 3, **characterised in that** the ratio of blend components A and B is in the range from A:B = 40:60 to A:B = 60:40.

5. Multilayer polypropylene film according to one or more of claims I to 4, **characterised in that** the blend of components A and B has a melt flow index of from 1.5 to 12 g/10 min, preferably from 2.5 to 6 g/10 min (230°C, 21.6 N load).

6. Multilayer polypropylene film according to one or more of claims I to 5, **characterised in that** the polypropylene or the polypropylene mixture of the base layer is a propylene copolymer and/or a propylene terpolymer.

7. Method of producing the multilayer polypropylene film according to claim 1, in which method the melts corresponding to the individual layers of the film defined in claim I are coextruded through a flat-film die, the coextruded film is taken off over a take-off roll having a temperature of from 20 to 100°C, the film is stretched biaxially at a longitudinal stretching ratio of from 4:1 to 9:1 and a transverse stretching ratio of from 6:1 to 10:1, the ratio of the transverse stretching ratio to the longitudinal stretching ratio being less than 2, and the biaxially stretched film is then heat-set, optionally subjected to corona treatment and then wound up, **characterised in that** the film has at least one matt surface.

8. Method according to claim 7, **characterised in that** the longitudinal stretching of the film is carried out at from 80 to 120°C and the transverse stretching is carried out at from 90 to 140°C.

9. Method according to claim 7 and/or 8, **characterised in that** the ratio of the transverse stretching ratio $T_s$ to the longitudinal stretching ratio $L_s$, that is to say $T_s$:$L_s$, is from 0.5 to 1.5.

10. Method according to one or more of claims 7 to 9, **characterised in that** the film is oriented in a balanced manner.

11. Use of the multilayer polypropylene film according to one or more of claims 1 to 6 as a packaging of high shrinkability.

12. Packaging comprising a multilayer polypropylene film according to one or more of claims 1 to 6.

**Revendications**

1. Feuille multicouche en polypropylène possédant un retrait élevé et qui a été soumise à une orientation biaxe, qui comprend au moins une couche de base contenant du polypropylène ou un mélange à base de polypropylène et au moins une couche de recouvrement qui contient un mélange ou un mélange homogène de deux composants I et II, **caractérisée en ce que** le rapport (rapport pondéral) des deux composants I et II se situe entre I:II = 10-90 et I:II = 90-10, et le composant I contient essentiellement

un homopolymère de propylène ou un copolymère

d'éthylène et de propylène ou
d'éthylène et de butylène ou
de propylène et de butylène ou
d'éthylène et d'une autre $\alpha$-oléfine contenant de 5 à 10 atomes de carbone ou
de propylène et d'une autre $\alpha$-oléfine contenant de 5 à 10 atomes de carbone ou

un terpolymère

d'éthylène et de propylène et de butylène ou
d'éthylène et de propylène et d'une autre $\alpha$-oléfine contenant de 5 à 10 atomes de carbone ou

un mélange de deux des homopolymères, des copolymères et des terpolymères mentionnés ou plus, ou un mélange homogène de deux des homopolymères, des copolymères et des terpolymères mentionnés ou plus, le cas échéant en mélange avec un ou plusieurs des homopolymères, des copolymères et des terpolymères mentionnés,

et le composant II contient essentiellement un HDPE possédant un indice de fluidité à chaud (MFI) mesuré conformément à la norme DIN 53 735, allant d'une valeur supérieure à 1 à 45 g/l min, ou encore un mélange homogène des deux composants A et B du mélange homogène,
dans laquelle le rapport (rapport pondéral) des deux composants A et B du mélange homogène se situe entre A: B = 20-80 et A:B = 80-20, et

le composant A du mélange homogène représente essentiellement un HDPE possédant un indice de fluidité à chaud (MFI) mesuré conformément à la norme DIN 53 735 allant d'une valeur supérieure à 1 à 45 g/10 min, et le composant B du mélange homogène représente essentiellement un homopolymère de propylène ou un copolymère

d'éthylène et de propylène ou
d'éthylène et de butylène ou
de propylène et de butylène ou
d'éthylène et d'une autre $\alpha$-oléfine contenant de 5 à 10 atomes de carbone ou
de propylène et d'une autre $\alpha$-oléfine contenant de 5 à 10 atomes de carbone ou

un terpolymère

d'éthylène et de propylène et de butylène ou
d'éthylène et de propylène et d'une autre $\alpha$-oléfine contenant de 5 à 10 atomes de carbone ou

un mélange de deux des homopolymères, des copolymères et des terpolymères mentionnés ou plus, ou un mélange homogène de deux des homopolymères, des copolymères et des terpolymères mentionnés ou plus, et
la feuille multicouche présente, à 120°C, un retrait en direction longitudinale supérieur à 20 %, de préférence de 25 à 50 %, et un retrait en direction transversale supérieur à 25 %, de préférence de 30 à 60 %, et la feuille est soumise à une orientation par étirage en direction longitudinale et en direction transversale, le rapport de l'étirage en direction transversale à l'étirage en direction longitudinale étant inférieur à 2, et la feuille est mate.

2. Feuille multicouche en polypropylène selon la revendication 1, **caractérisée en ce que**

le composant I représente essentiellement

un homopolymère de propylène ou un copolymère

d'éthylène et de propylène ou
d'éthylène et de butylène-1 ou
de propylène et de butylène-1 ou un terpolymère
d'éthylène et de propylène et de butylène-1 ou un mélange de deux des homopolymères, des copolymères et des terpolymères particulièrement préférés mentionnés ou plus, ou

un mélange homogène de deux des homopolymères, des copolymères et des terpolymères particulièrement préférés mentionnés ou plus, le cas échéant en mélange avec un ou plusieurs des homopolymères, des copolymères et des terpolymères mentionnés,

dans laquelle sont préférés en particulier, un polymère de polypropylène ou

des copolymères statistiques d'éthylène-propylène possédant une teneur en éthylène de 2 à 10 % en poids, de préférence de 5 à 8 % en poids, ou
des copolymères statistiques de propylène-butylène-1 possédant une teneur en butylène de 5 à 40 % en poids, de préférence de 20 à 30 % en poids,
chaque fois rapportés au poids total du copolymère, ou encore
des terpolymères statistiques d'éthylène-propylène-butylène-1

possédant une teneur en éthylène de 1 à 10 % en poids, de préférence de 2 à 6 % en poids et
une teneur en butylène-1 de 3 à 20 % en poids, de préférence de 8 à 10 % en poids,
chaque fois rapportés au poids total du terpolymère,
ou

un mélange homogène d'un terpolymère d'éthylène-propylène-butylène-1 et d'un copolymère de propylène-butylène-1

possédant une teneur en éthylène de 0,1 à 7 % en poids,
et une teneur en propylène de 50 à 90 % en poids,
et une teneur en butylène-1 de 10 à 40 % en poids,
chaque fois rapportés au poids total du mélange homogène de polymères, et

le composant B du mélange homogène représente essentiellement un homopolymère de polypropylène ou un copolymère

d'éthylène et de propylène ou
d'éthylène et de butylène-1 ou
de propylène et de butylène-1 ou un terpolymère
d'éthylène et de propylène et de butylène-1 ou un mélange de deux des homopolymères, des copolymères et des terpolymères particulièrement préférés mentionnés ou plus, ou encore
un mélange homogène de deux des homopolymères, des copolymères et des terpolymères particulièrement préférés mentionnés ou plus,
dans laquelle sont préférés en particulier,
un polymère de polypropylène ou

des copolymères statistiques d'éthylène-propylène possédant une teneur en éthylène de 2 à 10 % en poids, de préférence de 5 à 8 % en poids, ou
des copolymères statistiques de propylène-butylène-1 possédant une teneur en butylène de 5 à 40 % en poids, de préférence de 20 à 30 % en poids,
chaque fois rapportés au poids total du copolymère, ou

des terpolymères statistiques d'éthylène-propylène-butylène-1

possédant une teneur en éthylène de 1 à 10 % en poids, de préférence de 2 à 6 % en poids et
une teneur en butylène-1 de 3 à 20 % en poids, de préférence de 8 à 10 % en poids,
chaque fois rapportés au poids total du terpolymère,
ou

un mélange homogène d'un terpolymère d'éthylène-propylène-butylène-1 et d'un copolymère de propylène-butylène-1

possédant une teneur en éthylène de 0,1 à 7 % en poids,
et une teneur en propylène de 50 à 90 % en poids,
et une teneur en butylène-1 de 10 à 40 % en poids,
chaque fois rapportés au poids total du mélange homogène de polymères.

3. Feuille multicouche en polypropylène selon les revendications 1 et/ou 2, **caractérisée en ce que** le HDPE possède un indice de viscosité de 100 à 450 cm$^3$/g (mesuré conformément à la norme DIN 53 728, partie 4), une densité de 0,93 à 0,97 g/cm$^3$ (mesurée conformément à la norme DIN 53 479, procédé A), un degré de cristallisation de 35 à 80 % et un point de fusion de 120 à 150°C conformément à une mesure par calorimétrie par analyse différentielle.

4. Feuille multicouche en polypropylène selon une ou plusieurs des revendications 1 à 3, **caractérisée en ce que** le rapport des composants A et B du mélange homogène se situe dans le domaine de A:B = 40:60 et A:B = 60:40.

5. Feuille multicouche en polypropylène selon une ou plusieurs des revendications 1 à 4, **caractérisée en ce que** le mélange homogène des composants A et B possède un indice de fluidité à chaud de 1,5 à 12 g/10 min, de préférence de 2,5 à 6 g/10 min (température de 230°C sous une charge de 21,6 N).

6. Feuille multicouche en polypropylène selon une ou plusieurs des revendications 1 à 5, **caractérisée en ce que** le polypropylène ou le mélange à base de polypropylène de la couche de base est un copolymère de propylène et/ou un terpolymère de propylène.

7. Procédé pour la fabrication de la feuille multicouche en polypropylène selon la revendication 1, dans lequel on soumet à une coextrusion, à travers une filière pour feuilles, les masses fondues correspondant aux couches individuelles de la feuille, on tend la feuille soumise à une coextrusion pardessus un rouleau tendeur dont la température se situe entre 20 et 100°C, on soumet la feuille à un étirage biaxe avec un rapport d'étirage en direction longitudinale de 4:1 à 9:1 et avec un rapport d'étirage en direction transversale de 6:1 à 10:1, le rapport de l'étirage en direction transversale à l'étirage en direction longitudinale étant inférieur à 2, et on soumet ensuite à un thermofixage la feuille qui a été soumise à un étirage biaxe, on la soumet le cas échéant à un traitement par effluves négatives, puis on l'enroule, **caractérisé en ce que** la feuille présente au moins une surface mate.

8. Procédé selon la revendication 7, **caractérisé en ce qu'**on effectue l'étirage de la feuille en direction longitudinale à une température de 80 à 120°C et l'étirage en direction transversale à une température de 90 à 140°C.

9. Procédé selon les revendications 7 et/ou 8, **caractérisé en ce que** le rapport de l'étirage en direction transversale $Q_s$ à l'étirage en direction longitudinale $L_s$, c'est-à-dire $Q_s$:$L_s$ s'élève de 0,5 à 1,5.

10. Procédé selon une ou plusieurs des revendications 7 à 9, **caractérisé en ce que** la feuille est soumise à une orientation équilibrée.

11. Utilisation de la feuille multicouche en polypropylène selon une ou plusieurs des revendications 1 à 6 à titre d'emballage apte à un retrait élevé.

12. Emballage contenant une feuille multicouche en polypropylène selon une ou plusieurs des revendications 1 à 6.